# EUROPÄISCHE PATENTSCHRIFT

(11) **EP 2 994 676 B1**
(45) Veröffentlichungstag und Bekanntmachung des Hinweises auf die Patenterteilung: **02.08.2017**
(21) Anmeldenummer: 14723335.7
(22) Anmeldetag: 09.05.2014
(51) Int. Cl.: F16K 31/04

(54) **ANTRIEBSEINHEIT**
DRIVE UNIT
UNITÉ D'ACTIONNEMENT

(30) Priorität: 10.05.2013 DE 102013007927
(43) Veröffentlichungstag der Anmeldung: 16.03.2016
(73) Patentinhaber: Hoerbiger Automatisierungstechnik Holding GmbH, 86972 Altenstadt (DE)
(72) Erfinder: GRÖDL, Marcus, 87640 Biessenhofen (DE); GRIMMER, Berthold, 82380 Peißenberg (DE); HALLER, Daniel, 70569 Stuttgart-Vaihingen (DE); LANG, Bin, 70439 Stuttgart (DE); ROSSBACH, Tobias, 71229 Leonberg (DE); MARTINEZ, Carlos, 70563 Stuttgart (DE); ZYLKA, Norbert, 80634 München (DE); SCHAIBLE, Jochen, 72213 Altensteig (DE)
(74) Vertreter: Grättinger Möhring von Poschinger Patentanwälte Partnerschaft
(86) Internationale Anmeldenummer: PCT/EP2014/001247
(87) Internationale Veröffentlichungsnummer: WO 2014/180573

(56) Entgegenhaltungen:
- EP-A1- 0 777 327
- WO-A1-03/042586
- DE-A1- 2 713 237
- DE-A1- 19 807 375
- DE-A1-102008 058 364
- GB-A- 2 197 075

## Beschreibung

Die vorliegende Erfindung betrifft eine Antriebseinheit, insbesondere zur Betätigung von Durchflussregelarmaturen, umfassend ein Gehäuse, einen elektrischen Eingang, eine elektro-mechanische Wandlergruppe, einen mechanischen Ausgang und eine elektronische Steuerung. Insbesondere betrifft die vorliegende Erfindung, wie im Oberbegriff des Anspruchs 1 angegeben, eine derartige Antriebseinheit, bei der die Steuerung ein näher definiertes Display aufweist und weiterhin eine höher definierte Eingabeeinheit vorgesehen ist.

Der Betätigung von Durchflussregelarmaturen dienende Antriebseinheiten der eingangs genannten Art zählen in diversen Ausführungsvarianten zum Stand der Technik. Zu verweisen ist in diesem Zusammenhang beispielsweise auf die folgenden Publikationen: DE 19540441 A1, WO 2011/095351 A1, EP 2101061 A1, DE 9406760 U1, EP 1418343 A1 und WO 2011/095350 A1.

Eine gattungsgemäße Antriebseinheit gemäß dem Oberbegriff des Anspruchs 1 ist aus der DE 102008058364 A1 bekannt. Sie ist als Heizkörperregler ausgeführt, dessen Gehäuse aus einem Bedienteil und einem mit diesem lösbar verbundenen Unterteil besteht. Das Bedienteil weist alle für die Bedienung des Heizkörperreglers funktionswesentlichen aktiven Teile, insbesondere mindestens ein Display, die für eine Einstellung der Regelungsdaten erforderlichen Bedienelemente (Bedienknöpfe) und ein Steuerteil (Platine) auf. Im Unterteil sind mindestens ein Antriebsteil und ein Getriebe angeordnet.

Eine weitgehend vergleichbare Antriebseinheit, welche für die Betätigung einer Durchflussregelarmatur ausgelegt ist und ebenfalls ein Display und der Bedienung dienende Taster aufweist, ist aus der WO 03/042586 A1 bekannt.

Auf dem vorstehend dargelegten Stand der Technik aufbauend liegt der vorliegenden Erfindung die Aufgabe zugrunde, eine Antriebseinheit der eingangs angegebenen Art bereitzustellen, die sich im Interesse einer gesteigerten Prozesssicherheit von Anlagen, welche - insbesondere zur Betätigung von Durchflussregelarmaturen - mit solchen Antriebseinheiten ausgestattet sind, durch eine verbesserte Bedien- und Handhabbarkeit auszeichnet.

Gelöst wird diese Aufgabenstellung gemäß der vorliegenden Erfindung, wie im Anspruch 1 angegeben, indem bei einer Antriebseinheit der gattungsgemäßen Art die Eingabeeinheit von den gegen die Wirkung einer Rückstelleinrichtung eindrückbaren Tastern betätigte berührungslose Schalter umfasst und jeweils der den Schalter betätigenden Position des Tasters ein von dem Schalter selbst unabhängiger mechanischer Anschlag zugeordnet ist, wobei weiterhin die Zuordnung der in der Steuerung wirksamen Schaltfunktionen zu den einzelnen Tastern veränderbar ist und das Display - um die den einzelnen Tastern zugewiesene Schaltfunktion in dem Display, benachbart zu dem die Taster angeordnet sind, anzuzeigen - einen Betriebsinformationsbereich und mindestens einen, den Tastern benachbarten Betätigungsinformationsbereich umfasst, wobei die aktuelle Zuordnung von Funktionen zu den einzelnen Tastern in dem (den) Betätigungsinformationsbereich(en) angezeigt wird. Die erfindungsgemäße Antriebseinheit zeichnet sich, mit anderen Worten, durch spezifische Mittel aus, mittels derer eine Bedienperson von außen auf die Funktion der Antriebseinheit Einfluss nehmen kann, indem nämlich ein von der Bedienperson betätigbarer Taster vorgesehen ist, welcher das Gehäuse durchdringt und gegen die Wirkung einer Rückstelleinrichtung bis zu einem mechanischen Anschlag eindrückbar ist. Der Anschlag ist dabei unabhängig von einem Schalter, der einen Teil der Steuerung bildet, berührungslos ausgeführt ist und durch den Taster betätigbar ist. Die vorliegende Erfindung trägt auf diese Weise mehreren praxisrelevanten Umständen Rechnung. Dazu zählt zum einen, dass eine Einflussnahme auf die Steuerung der Antriebseinheit häufig in Betriebssituationen erfolgt, in denen es darum geht, eine Gefahr abzuwenden bzw. einen irregulären Betriebszustand zu beenden, wobei in solchen Situationen eine Bedienung der Antriebseinheit typischerweise nicht ruhig und gelassen erfolgt, sondern vielmehr in einer gewissen Hektik. Zum anderen tragen in Anlagen, die mit solchen Antriebseinheiten ausgestattet sind, die Bedienpersonen häufig Schutzkleidung, insbesondere Schutzhandschuhe. Letztere verhindern typischerweise eine feinfühlige Bedienung der Antriebseinheit. Durch die Ausführung der Antriebseinheit gemäß der vorliegenden Erfindung ist sichergestellt, dass auch eine - ggfs. in einer tatsächlichen oder vermeintlichen Notsituation erfolgende - vergleichsweise grobe Einflussnahme auf die Eingabeeinheit, welche auf die Steuerung der Antriebseinheit einwirkt, nicht zu Schäden in der Steuerung führt, eben weil das Eindrücken des Tasters durch einen mechanischen Anschlag begrenzt ist, welcher von dem durch den Taster betätigten Schalter unabhängig ist, und der Schalter selbst zudem berührungslos arbeitet. Selbst bei äußerst groben, bereits außerhalb des Bereichs einer sachgerechten Betätigung des Tasters liegenden Einflussnahme bleibt somit der Schalter intakt und ist eine Beschädigung der elektronischen Steuerung durch nicht-sachgerechte Betätigung ausgeschlossen. Dies kommt der Zuverlässigkeit der Antriebseinheit entgegen, was gegenüber dem Stand der Technik einen erheblichen sicherheitstechnischen Gewinn darstellt.

Zudem ist das Display insbesondere (auch) dazu eingerichtet, die Schaltfunktionen, die den einzelnen Tastern zugeordnet sind, anzuzeigen. Die nach der Erfindung mögliche Veränderung der Zuordnung der in der Steuerung wirksamen Schaltfunktionen zu den einzelnen Tastern ist unter verschiedenen Gesichtspunkten vorteilhaft. Zum einen können sich bei menügeführten Steuerungen die Schaltfunktionen in Abhängigkeit von der jeweiligen Ebene des Menüs ändern. Zum anderen kann die Zuweisung bestimmter Schaltfunktionen zu den einzelnen Tastern von der jeweiligen Einbausituation der Antriebseinheit abhängig gemacht werden. Beispielsweise kann auf diese Weise unabhängig von der Einbaulage der Antriebseinheit (stehend, liegend, hängend), welche sich oft nicht frei wählen lässt, sondern vielmehr aus der Anlagenumgebung ergibt, eine Notbetätigung stets an einer bestimmten Position (z.B. links oben) vorgesehen sein, indem sie einen dort angeordneten Taster zugewiesen wird. Dies ist wiederum ein bedeutender sicherheitsrelevanter Aspekt, weil in einer Gefahrensituation automatisch und instinktiv der - für sämtliche Antriebseinheiten der Anlage trotz unterschiedlicher Einbaulagen übereinstimmend (z.B. oben links) angeordnete - Notschalter betätigt werden kann, ohne dass es einer Ablesung des Displays bedarf. Das bedeutet, dass auch bei ungünstigen Ablesebedingungen (Dunkelheit infolge Stromausfall, Sichtbehinderung durch Rauch) der für ein Notabschalten der Antriebseinheit maßgebliche Taster zuverlässig aufgefunden und betätigt werden kann.

Gemäß einer ersten bevorzugten Weiterbildung der vorliegenden Erfindung ist der Schalter optisch ausgeführt, insbesondere indem er eine Lichtschranke umfasst. Dies ermöglicht ein besonders zuverlässiges Schaltverhalten auch unter ungünstigen äußeren Bedingungen; und ein in die optische Messstrecke der Lichtschranke eindringendes Schaltglied (Unterbrecher) lässt sich hervorragend durch den nach der vorliegenden Erfindung ausgeführten Taster betätigen. Das Schaltglied kann sogar an dem Taster, insbesondere an dessen Stirnseite, angeordnet bzw. ausgeführt sein. Indessen kann das Schaltglied auch ein von dem Taster unabhängiges Bauteil darstellen. Dabei sind optischer Schalter, Schaltglied und Taster so aufeinander abgestimmt, dass das Schaltglied den Schalter (noch) nicht berührt, wenn der Taster bei seiner Betätigung an dem ihm zugeordneten mechanischen Anschlag anstößt.

Eine andere bevorzugte Weiterbildung der vorliegenden Erfindung zeichnet sich dadurch aus, dass der Schalter direkt auf einer weitere Komponenten der elektronischen Steuerung tragenden Platine angeordnet ist. Diese Ausführung, die besonders kompakte Bauweisen zulässt, wird eben dadurch ermöglicht, dass in Anwendung der vorliegenden Erfindung ausgeschlossen ist, dass das Betätigen des Tasters, selbst wenn dieses heftig ist, zu einer Beschädigung des Schalters bzw. der diesen tragenden Platine durch übermäßige Krafteinwirkung führt.

Gemäß einer wiederum anderen bevorzugten Weiterbildung der Erfindung ist das Gehäuse der Antriebseinheit explosionsgeschützt ausgeführt und der Taster gegenüber dem Gehäuse mittels eines Dichtsystems dergestalt abgedichtet, dass dieses einerseits einen zuverlässigen Schutz gegen eindringende flüssige oder auch staubförmige Medien bildet, andererseits aber die Einhaltung des für den Explosionsschutz relevanten maximalen Luftspalts zwischen Gehäuse und Taster (ATEX-Spalt) sicherstellt. Das Dichtsystem kann dabei insbesondere kaskadenförmig ausgeführt sein und eine Doppeldichtung umfassen. Namentlich für Anwendungen mit Explosionsschutzauflagen ist die vorliegende Erfindung mit besonderem Vorteil anwendbar; denn die explosionsgeschützte Abdichtung des Tasters gegenüber dem Gehäuse und die typischerweise hieraus resultierende Kraft-Weg-Charakteristik beim Eindrücken des Tasters führt, wie sich aus den vorstehenden Erläuterungen der vorliegenden Erfindung ergibt, nicht zu einer Gefährdung des durch den Taster betätigten Schalters durch unzulässig hohe Krafteinwirkung.

Eine abermals andere bevorzugte Weiterbildung der vorliegenden Erfindung zeichnet sich dadurch aus, dass die Rückstelleinrichtung (des Tasters) eine zweistufige, druckpunktartig wirkende Rückstellfedereinheit umfasst. Demgemäß kann der Taster zunächst gegen einen vergleichsweise geringen Widerstand eingedrückt werden, bis er einen Druckpunkt erreicht, von dem ab ein Eindrücken des Tasters nur mit signifikant größerem Kraftaufwand möglich ist. Dies wirkt sich positiv aus auf die Betätigung der Eingabeeinheit der Antriebseinheit durch eine Schutzkleidung, insbesondere Schutzhandschuhe tragende Bedienperson; denn über den besagten Druckpunkt erhält diese auch beim Tragen von schweren Schutzhandschuhen eine spürbare "Rückmeldung" beim Betätigen der Eingabeeinheit der Antriebseinheit.

Der den Eindrückweg des Tasters begrenzende, von dem Schalter unabhängige mechanische Anschlag ist besonders bevorzugt einstellbar. Dies erlaubt es, dass - durch geeignete Einstellung des Anschlags - spezifischen Randbedingungen des jeweiligen Einsatzfeldes Rechnung getragen wird. So ist es insbesondere für den Einsatz in stark schmutzgefährdeten Anlagen oder bei unwirtlichen klimatischen Verhältnissen sinnvoll, einen großen Betätigungsweg vorzusehen, welcher bei Anwendungen im Laborumfeld eher als störend empfunden würde. Zudem ist eine optimale Abstimmung zwischen dem Taster und dem durch diesen betätigten Schalter möglich, um den Taster an den jeweils zugeordneten Schalter anzupassen. Dies kommt der Zuverlässigkeit der Funktion entgegen.

Die weiter oben erläuterte veränderbare Zuordnung der in der Steuerung wirksamen Schaltfunktionen zu den einzelnen Tastern kann manuell erfolgen, d.h. typischerweise bei der Errichtung der Anlage festgelegt bzw. eingestellt werden. Indessen ist, gemäß einer bevorzugten Weiterbildung der Erfindung, möglich, einen Einbaulagensensor vorzusehen, wobei in der Steuerung eine automatische, von dem Signal des Einbaulagensensors abhängige Zuweisung der Schaltfunktionen zu den einzelnen Tastern erfolgt. Der vorstehend erläuterte sicherheitsrelevante Aspekt kann in diesem Falle nicht durch eine unzutreffende Einstellung bei der Errichtung der Anlage unterbunden werden.

Besonders günstig ist es, wenn das Display ein längsrechteckiges Format aufweist und Taster, von denen mindestens zwei vorgesehen sind, (ggf. gruppiert) an den beiden kurzen Seiten des Displays angeordnet sind, wobei das Display einen zentralen, im Wesentlichen quadratischen Betriebsinformationsbereich und zwei seitlich angeordnete Betätigungsinformationsbereiche aufweist. Indem der Betriebsinformationsbereich, in welchem beispielsweise Betriebsdaten und/oder Informationen zum Bedienmenü angezeigt werden, im Wesentlichen quadratisch ausgeführt ist, wird wiederum eine von der jeweiligen Einbaulage der Antriebseinheit unabhängige Darstellung der Betriebsinformationen möglich; d.h., die Betriebsinformationen werden dem Bediener in einer übereinstimmenden Darstellung vermittelt, unabhängig davon, ob die Antriebseinheit stehend, liegend oder hängend eingebaut ist. In diesem Zusammenhang kann wiederum ein Einbaulagensensor zum Tragen kommen, wobei die Orientierung der Anzeige von Betriebsinformationen in dem Betriebsinformationsbereich des Displays automatisch in Abhängigkeit von dem Signal des Einbaulagensensors erfolgt.

Im Interesse einer Fernüberwachung und/oder Fernbetätigung weist die Steuerung der Antriebseinheit im Übrigen bevorzugt eine Schnittstelle für eine drahtlose Datenübertragung auf. In diesem Falle entfällt der bei einer kabelgebundenen Datenübertragung mit der Verlegung entsprechender Signal- und Steuerleitungen verbundene Aufwand. Zusätzlich lassen sich damit insbesondere bei einer ungünstigen Einbausituation Betriebsinformationen an einem leicht zugänglichen, geräteunabhängigen Ort einsehen und bearbeiten.

Die vorliegende Erfindung lässt sich ersichtlich mit Vorteil bei unterschiedlichst ausgeführten Antriebseinheiten anwenden. Eine insoweit besonders bevorzugte Weiterbildung der Antriebseinheit zeichnet sich allerdings dadurch aus, dass die elektro-mechanische Wandlergruppe zweistufig ausgeführt ist, indem sie eine elektro-fluidische erste Wandlerstufe und eine fluid-mechanische zweite Wandlerstufe umfasst. Sicherheitsrelevante Aspekte wie beispielsweise die Möglichkeit, fluidische Energie für eine Notbetätigung (bei Ausfall der Stromversorgung) bereitzustellen, sprechen für eine solche Ausführung der Antriebseinheit, wobei sich insbesondere hier die weiter oben eingehend erläuterten verschiedenen sicherheitsrelevanten Aspekte und Vorteile der vorliegenden Erfindung synergetisch nutzbringend auswirken.

An dem Gehäuse kann im Übrigen ein von außen betätigbarer, auf die Steuerung einwirkender Betriebsartenschalter angeordnet sein, mittels dessen beispielsweise zwischen einer automatischen bzw. fernbetätigten Einflussnahme auf die Antriebseinheit einerseits und einer manuellen Einflussnahme auf die Antriebseinheit andererseits umgeschaltet werden kann. Um ein unbeabsichtigtes Verstellen des Betriebsartenschalters zu verhindern, kann dieser insbesondere mechanisch verriegelt werden. Auch kann er abschließbar ausgeführt sein, so dass nur autorisierte Personen eine Verstellung des Betriebsartenschalters vornehmen können.

Die vorliegende Erfindung ist, wie sich aus den vorstehenden Erläuterungen ergibt und nur der Vollständigkeit halber hier nochmals betont wird, auf verschiedenste Antriebseinheiten anwendbar. Beispielsweise kann der mechanische Ausgang der Antriebseinheit eine Linearbewegung, eine Drehbewegung oder eine sonstige Bewegung ausführen. Weiterhin kann im Falle einer zweistufigen elektro-mechanischen Wandlergruppe mit einer elektro-fluidischen ersten Wandlerstufe eine elektro-hydraulische oder eine elektro-pneumatische erste Wandlerstufe zum Einsatz kommen. Auch können die auf die Taster wirkenden Rückstelleinrichtungen unterschiedlichst ausgeführt sein, d.h. statt mechanisch z.B. auch pneumatisch, hydraulisch, elektrisch oder dergleichen. Weiterhin besteht auch für die Ausführung des berührungslos arbeitenden Schalters eine große Bandbreite möglicher technischer Konkretisierungen.

Im Folgenden wird die vorliegende Erfindung anhand in der Zeichnung veranschaulichter Ausführungsbeispiele näher erläutert. Dabei zeigt
- Fig. 1: in perspektivischer Ansicht eine an eine Durchflussregelarmatur angebaute, deren Betätigung dienende Antriebseinheit nach der vorliegenden Erfindung,
- Fig. 2: einen Horizontalschnitt durch die in Fig. 1 gezeigte Antriebseinheit im Bereich von deren Eingabeeinheit,
- Fig. 3: schematisch eine im Rahmen der vorliegenden Erfindung einsetzbare Taster-Schalter-Einheit,
- Fig. 4: schematisch eine zweite im Rahmen der vorliegenden Erfindung einsetzbare Taster-Schalter-Einheit,
- Fig. 5: schematisch eine dritte im Rahmen der vorliegenden Erfindung einsetzbare Taster-Schalter-Einheit,
- Fig. 6: schematisch eine vierte im Rahmen der vorliegenden Erfindung einsetzbare Taster-Schalter-Einheit,
- Fig. 7: schematisch eine fünfte im Rahmen der vorliegenden Erfindung einsetzbare Taster-Schalter-Einheit,
- Fig. 8: die Bedienoberfläche der Eingabeeinheit der Antriebseinheit nach Fig. 1 bei deren stehender Anordnung und
- Fig. 9: die Bedienoberfläche der Eingabeeinheit der Antriebseinheit nach Fig. 1 bei deren liegender Anordnung.

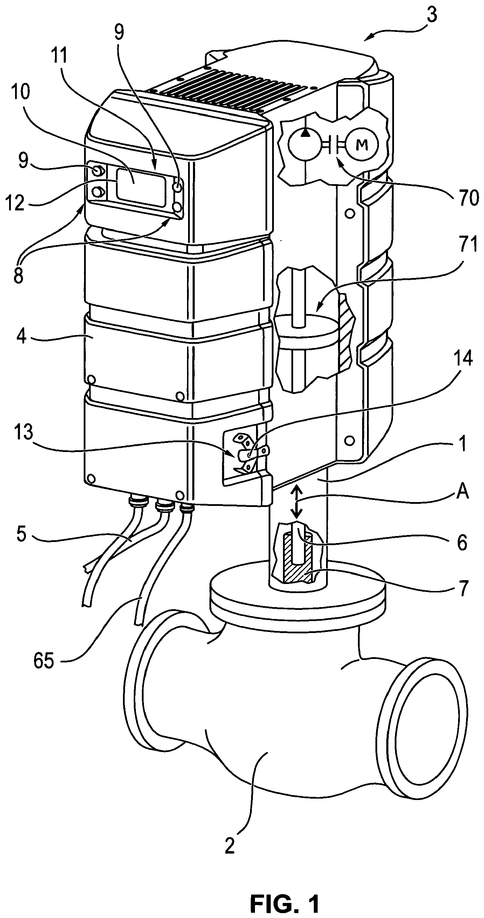

Die in Fig. 1 veranschaulichte, über eine Tragstruktur 1 auf die Durchflussregelarmatur 2 aufgesetzte und deren Betätigung dienende Antriebseinheit 3 umfasst ein Gehäuse 4. In diesem ist - in als solches bekannter Weise - eine elektro-mechanische Wandlergruppe 69 aufgenommen, welche einen elektrischen Eingang 5 und einen mechanischen Ausgang 6 aufweist und (beispielsweise im Sinne der WO 2011/095351 A1) zweistufig ausgeführt ist, indem sie eine elektro-fluidische erste Wandlerstufe 70 und eine fuidischmechanische zweite Wandlerstufe 71 umfasst. Der - lineare Bewegungen (Pfeil A) ausführende - mechanische Ausgang 6 der elektro-mechanischen Wandlergruppe 69 ist mit dem Eingang 7 der Durchflussregelarmatur 2 gekoppelt.

Die Antriebseinheit 3 weist weiterhin eine innerhalb des Gehäuses 4 angeordnete elektronische Steuerung auf. Über eine Eingabeeinheit 8 können Einstellungen an der Steuerung vorgenommen werden. Die Eingabeeinheit 8 umfasst dabei vier das Gehäuse 4 durchdringende, ein Stück weit aus dem Gehäuse herausragende Taster 9. Diese sind zu jeweils zweien gruppiert beidseits benachbart eines Displays 10 angeordnet, welches zusätzlich zur Eingabeeinheit 8 weiterer Teil der Bedienoberfläche 11 ist. Diese ist in einer muldenartigen Vertiefung 12 des Gehäuses 4 geschützt untergebracht.

An dem Gehäuse 4 ist weiterhin ein auf die Steuerung einwirkender Betriebsartenschalter 13 angeordnet. Dieser ist als Drehknauf 14 ausgeführt und in drei Stellungen mechanisch verriegelbar. Zum Zwecke eines Eingriffs in die Steuerung aus der Distanz sowie einer Fernüberwachung der Antriebseinheit 3 weist die Steuerung weiterhin neben einer kabelgebundenen Kommunikationsschnittstelle 65 eine Schnittstelle für eine drahtlose Datenübertragung (z.B. mit einem WLAN- oder Bluetooth-Übertragungsstandard) auf.

Das Display 10 ist in das Gehäuse 4 hinter einem Gehäusedurchbruch 15 eingesetzt, d.h. gegenüber dem Gehäusedurchbruch 15 zum Inneren des Gehäuses 4 hin versetzt. Der Gehäusedurchbruch 15 ist auf der Innenseite des Gehäuses 4 von einer Schutzglasplatte 16 abgedeckt, welche die den Gehäusedurchbruch 15 umgrenzende Einfassung 17 überlappt, wobei im Bereich jener Überlappung eine umlaufende Dichtung 18 angeordnet ist. Die Schutzglasplatte 16 wird in dem Gehäuse 4 mittels einer Fassung 19 fixiert, die in ein an dem Gehäuse 4 ausgeführtes Mutterngewinde 20 eingeschraubt ist. An der Fassung 19 ist über Halter 21 auch das Display 10 fixiert.

Die Taster 9 sind verschiebbar, d.h. längs ihrer Achse eindrückbar (Pfeil B) in gestreckten Bohrungen 22 geführt, welche ihrerseits in entsprechenden Verstärkungen 23 des Gehäuses 4 ausgeführt sind. Die Bohrungen 22 sind dabei als Stufenbohrungen ausgebildet, so dass bei Nicht-Betätigung des jeweiligen Tasters 9 eine bundartige Erweiterung 24 des letzteren unter der Einwirkung einer - als Rückstellfeder 25 ausgeführten - Rückstelleinrichtung 26 an die Stufe 27 der Bohrung 22 gepresst wird. Die Stufe 27 bildet auf diese Weise einen - die Grundstellung (Nicht-Betätigungsstellung) des betreffenden Tasters 9 definierenden - ersten Anschlag 28. Ein zweiter Anschlag 29, welcher den Weg, um den der Taster 9 gegen die Wirkung der Rückstelleinrichtung 26 eingedrückt werden kann, begrenzt, wird durch eine an der Verstärkung 23 des Gehäuses 4 fixierte Anschlagplatte 30 gebildet, welche mit dem am Taster 9 ausgeführten Absatz 31 zusammenwirkt.

Die Anschlagplatte 30 weist jeweils einen Durchbruch 32 auf, durch welchen ein stirnseitig an dem Taster 9 vorhandenes Schaltglied 33 hindurchragt. Das Schaltglied 33 ist als Unterbrecher 34 ausgeführt, welcher mit einer - aus einer optischen Lichtquelle 66 und einem dieser gegenüberliegend angeordneten Detektor 67 bestehenden - Lichtschranke 35 zusammenwirkt, die Teil eines der Steuerung zugeordneten berührungslosen Schalters 36 ist. D.h., der Unterbrecher 3 dringt bei Betätigung des Tasters 9 in den Messspalt 37 der Lichtschranke 35 ein, wodurch sich der Schaltzustand des betreffenden Schalters 36 ändert. Entscheidend ist dabei, dass die den Schalter 36 betätigende Position bzw. Endstellung des Tasters 9 nicht durch den Schalter 36 selbst definiert ist, sondern vielmehr durch den weiter oben erläuterten, davon unabhängigen zweiten mechanischen Anschlag 29.

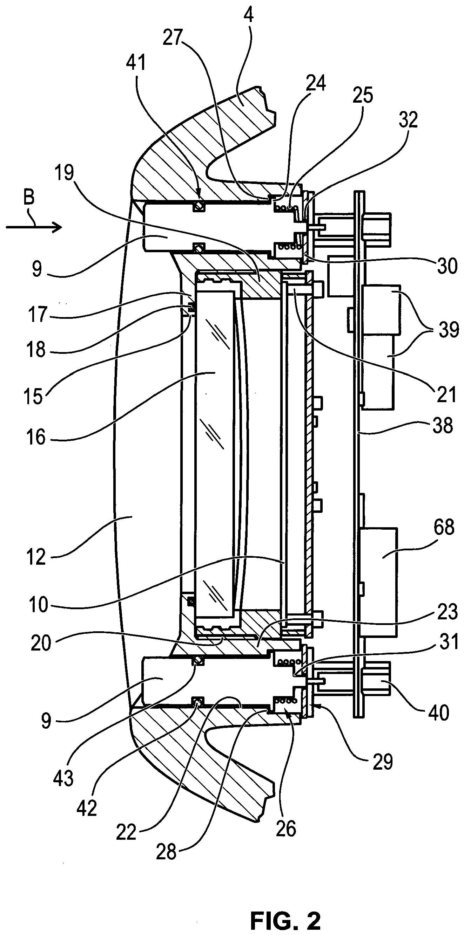

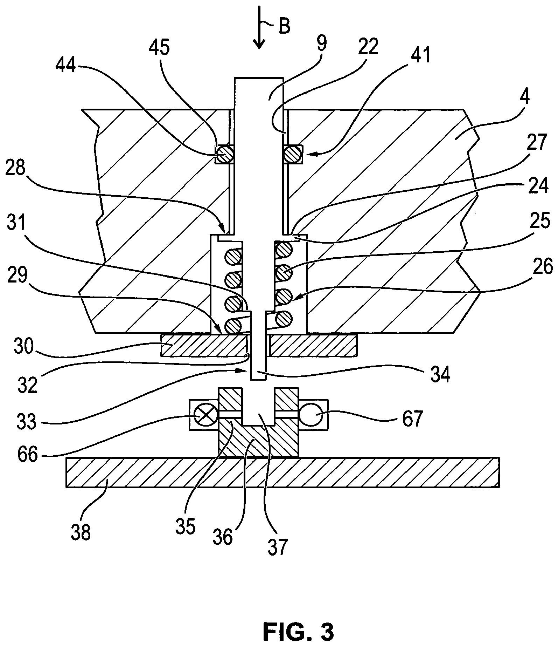

Die vier, den vier Tastern 9 zugeordneten Schalter 36 sind dabei direkt auf einer Platine 38 angeordnet, die auch noch weitere Komponenten 39 der elektronischen Steuerung trägt und mittels der Halter 40 in dem Gehäuse 4 fixiert ist. Die Taster 9 sind im Übrigen gegenüber der jeweiligen Bohrung 22 durch geeignete Dichtungen 41 abgedichtet, um ein Eindringen von Verunreinigungen, insbesondere flüssiger und gasförmiger Medien und Stäube, in das Innere des Gehäuses 4 zu verhindern. Nach Fig. 2 ist hierzu jeweils ein O-Ring 42 in eine Ringnut 43 des betreffenden Tasters 9 eingelegt. Fig. 3, die ansonsten im Wesentlichen die in Fig. 2 dargestellten Taster-Schalter-Gruppen schematisch veranschaulicht, zeigt demgegenüber die Unterbringung eines O-Rings 44 in einer in der Bohrung 22 vorgesehenen Ringnut 45.

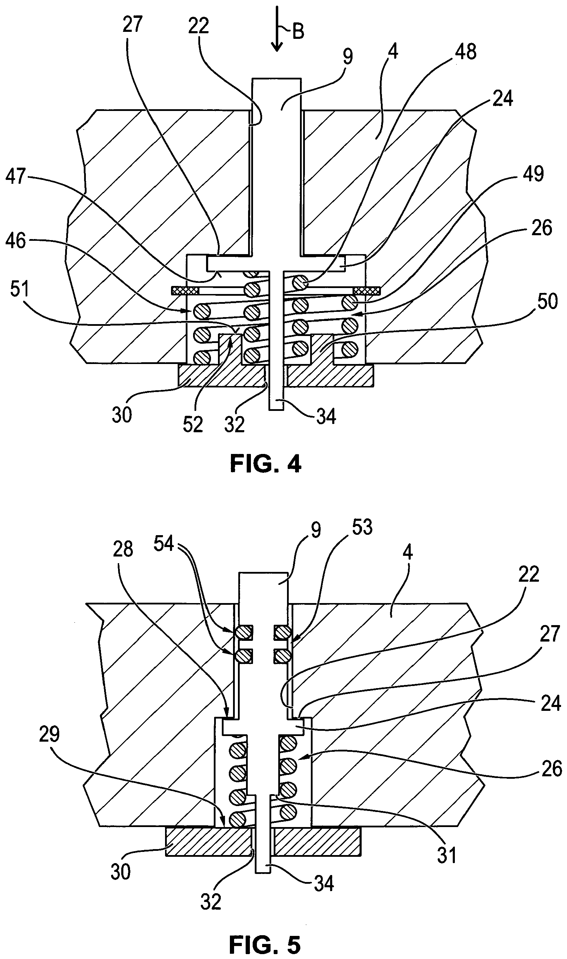

Fig. 4 veranschaulicht schematisch die Möglichkeit, die Rückstelleinrichtung 26 in Form einer zweistufigen, druckpunktartig wirkenden Rückstellfedereinheit 46 auszuführen. Zwischen der Anschlagplatte 30 und der Stirnseite 47 des Tasters 9 wirkt ständig, d.h. bei jeder Stellung des Tasters innerhalb der Bohrung 22 eine erste Rückstellfeder 48. Demgegenüber gelangt eine - ebenfalls zwischen der Anschlagplatte 30 und der Stirnseite 47 des Tasters 9 angeordnete - zweite Rückstellfeder 49 erst dann zur Anlage an der Stirnseite 47 des Tasters 9, wenn letzterer - gegen die Kraft der ersten Rückstellfeder 48 - um ein bestimmtes, die Lichtschranke 35 (vgl. Fig. 3) noch nicht schaltendes Maß eingedrückt wird. An der Anschlagplatte 30 ist eine Führungs- und Anschlaghülse 50 (alternativ kommen z.B. auch mehrere einzelne Anschläge in Betracht) angeordnet, welche sich zwischen der ersten Rückstellfeder 48 und der zweiten Rückstellfeder 49 erstreckt und deren Stirnseite 51 im Zusammenwirken mit der Stirnseite 47 des Tasters 9 den eigentlichen zweiten Anschlag 52 bildet.

Fig. 5 veranschaulicht in Abwandlung der Fig. 3 eine Abdichtung des Tasters 9 gegenüber dem Gehäuse 4 durch ein Dichtungssystem 53 mit kaskadenartiger Doppeldichtung 54. Dies stellt - in Verbindung mit einer entsprechenden Ausführung des Gehäuses 4 - eine Möglichkeit dar, bei Anwendung der Antriebseinheit 3 unter widrigen Einsatzbedingungen die notwendige Schutzklasse gegen Eindringen von Medien sicherzustellen. Gleichzeitig bleibt der für den Explosionsschutz relevante maximale Luftspalt zwischen Gehäuse und Taster gewahrt.

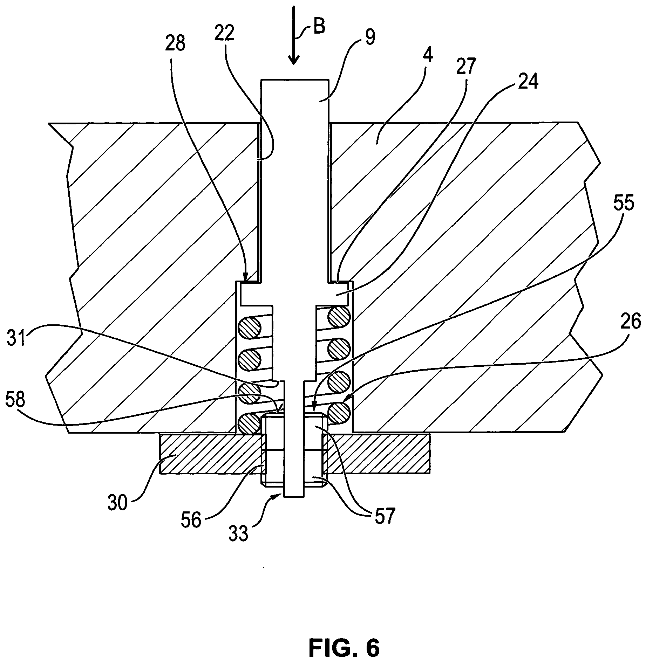

Ebenfalls in Abwandlung der Fig. 3 veranschaulicht Fig. 6 eine Möglichkeit, den zweiten Anschlag 55 einstellbar auszuführen. Und zwar ist in die am Gehäuse 4 fixierte Anschlagplatte 30, nämlich in eine an dieser ausgeführten Gewindebohrung 56 eine Anschlaghülse 57 eingeschraubt. Durch Verdrehen der Anschlaghülse 57, deren Stirnseite 58 im Zusammenwirken mit dem Absatz 31 des Tasters 9 den eigentlichen zweiten Anschlag 55 bildet, lässt sich deren Eindringtiefe und somit die Endposition des Tasters 9 bei dessen Betätigung (Pfeil B) verändern.

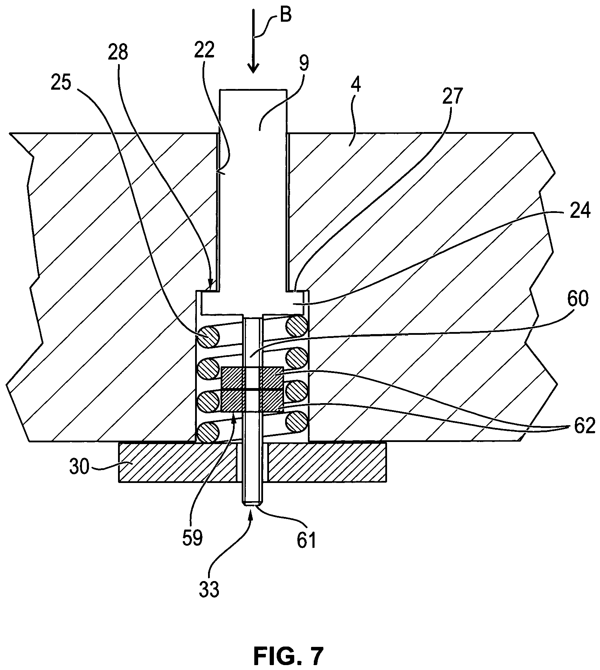

Eine bevorzugte alternative Ausführung eines einstellbaren zweiten Anschlags 59 für den Taster 9 veranschaulicht Fig. 7. Bei dieser Ausführungsform weist der Vorsprung 60 des Tasters 9, dessen Endabschnitt 61 das mit der Lichtschranke 35 (vgl. Fig. 3) zusammenwirkende Schaltglied 33 bildet, ein Außengewinde auf, auf welches eine ein Mutterngewinde aufweisende, mit der gehäusefesten Anschlagplatte 30 zusammenwirkende Anschlagscheibe 62 aufgeschraubt ist. Vorzugsweise wird die Anschlagscheibe 62 zweiteilig ausgeführt gegeneinander derart geklemmt, dass ein unbeabsichtigtes Lösen im Betrieb ausgeschlossen ist. Durch Verdrehen der Anschlagscheibe 62 lässt sich die den Schalter 36 (vgl. Fig. 3) schaltende Endposition des Tasters 9 verändern.

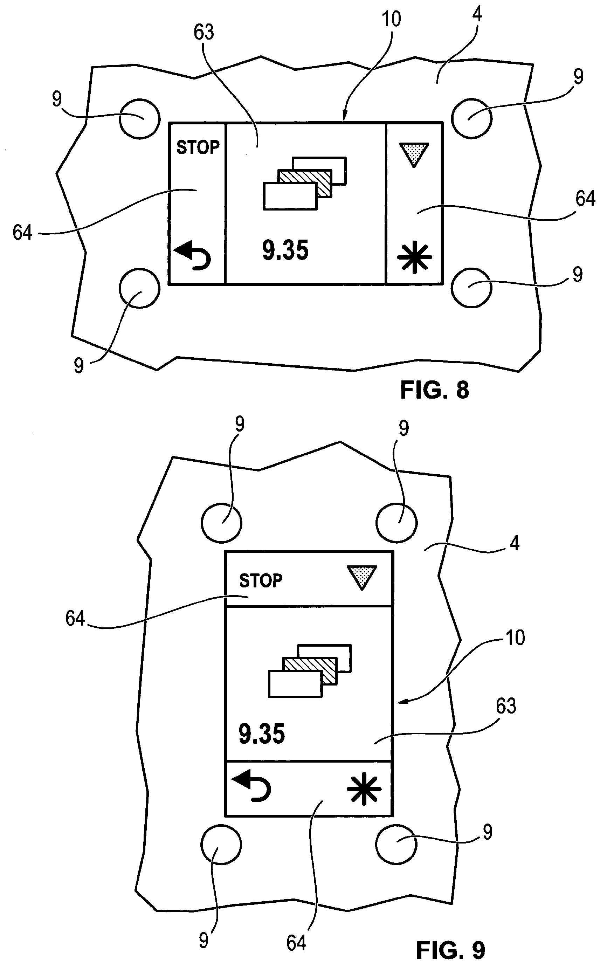

Das Display 10 ist, wie Fig. 1 entnehmbar ist und die Fig. 8 und 9 eingehender veranschaulichen, längsrechteckig ausgeführt. Der Bildschirmbereich ist dreigeteilt untergliedert. Er umfasst einen den mittleren Teil des Displays erfassenden Betriebsinformationsbereich 63 von etwa quadratischem Format und zwei seitliche, den Tastern 9 benachbarte Betätigungsinformationsbereiche 64. In den beiden Betätigungsinformationsbereichen 64 wird die aktuelle, den einzelnen Tastern 9 jeweils zugewiesene steuerungstechnische Funktion angezeigt, welche sowohl von der jeweiligen Menüebene der Steuerung als auch der Einbaulage der Antriebseinheit 3 abhängt.

Die Antriebseinheit 3 umfasst einen Einbaulagensensor 68. Die Anzeige der Betriebsinformationen und der Tasterbelegung auf dem Display 10 erfolgt automatisch in Abhängigkeit von der jeweiligen, durch den Einbaulagensensor 68 ermittelten Einbaulage der Antriebseinheit 3, d.h. der (in Fig. 1 gezeigten) stehenden Einbaulage, einer (um 90° gedrehten) liegenden Einbaulage oder aber einer (um 180° gedrehten) hängenden Einbaulage. Fig. 8 zeigt die Bedienoberfläche 11 mit einer beispielhaften Anzeige auf dem Display 10 mit Betriebsinformationen sowie Betätigungsinformationen bei stehender Einbaulage (Fig. 1) der Antriebseinheit 3. Die Anzeige des Displays 10 bei identischer Betriebssituation, allerdings um 90° gedrehter, liegender Einbaulage der Antriebseinheit 3 ist in Fig. 9 veranschaulicht. Aufgrund entsprechender Berücksichtigung des Signals des Einbaulagensensors in der Steuerung erfolgt bei sämtlichen Einbaulagen der Antriebseinheit 3 eine (in Raumrichtung) übereinstimmende Orientierung der Anzeige der Betriebsinformationen in dem Betriebsinformationsbereich 63 sowie eine (in Raumrichtung) übereinstimmende Anordnung der Funktionsbelegung der vier Taster 9 (links oben: "Notabschaltung" links unten: "Eine Ebene zurück", rechts oben: "Blättern", rechts unten: "Quittieren) in den beiden Betätigungsinformationsbereichen 64. Die Funktion "Notabschaltung" ist dabei überdies auch in sämtlichen Menüebenen stets dem links oben angeordneten Taster 9 zugewiesen.

## Patentansprüche

1. Antriebseinheit (3), insbesondere zur Betätigung von Durchflussregelarmaturen (2), umfassend ein Gehäuse (4), einen elektrischen Eingang (5), eine elektro-mechanische Wandlergruppe (69), einen mechanischen Ausgang (6) und eine elektronische Steuerung, wobei die Steuerung ein elektronisches Display (10) aufweist und eine Eingabeeinheit (8) mit mehreren das Gehäuse (4) durchdringenden, benachbart zu dem Display (10) angeordneten, gegen die Wirkung einer Rückstelleinrichtung (26) eindrückbaren Tastern (9) umfasst,
**gekennzeichnet durch** von den Tastern (9) betätigte berührungslose Schalter (36), wobei den die Schalter (36) betätigenden Positionen der Taster (9) von den Schaltern (36) selbst unabhängige mechanische Anschläge (29, 52, 55, 59) zugeordnet sind, wobei weiterhin die Zuordnung der in der Steuerung wirksamen Schaltfunktionen zu den einzelnen Tastern (9) veränderbar ist und das Display (10) einen Betriebsinformationsbereich (63) und mindestens einen, den Tastern (9) benachbarten Betätigungsinformationsbereich (64) umfasst, wobei in dem Betätigungsinformationsbereich (64) die aktuelle Zuordnung der Funktion zu den einzelnen Tastern (9) angezeigt wird.

2. Antriebseinheit nach Anspruch 1, **dadurch gekennzeichnet, dass** mindestens ein Schalter (36) optisch ausgeführt ist, insbesondere indem er eine Lichtschranke (35) umfasst.

3. Antriebseinheit nach Anspruch 1 oder Anspruch 2, **dadurch gekennzeichnet, dass** mindestens ein Schalter (36) direkt auf einer weitere Komponenten (39) der elektronischen Steuerung tragenden Platine (38) angeordnet ist.

4. Antriebseinheit nach einem der Ansprüche 1 bis 3, **dadurch gekennzeichnet, dass** das Gehäuse (4) explosionsgeschützt ausgeführt und die Taster (9) gegenüber dem Gehäuse (4) mittels eines explosionsgeschützten Dichtsystems (53) abgedichtet sind.

5. Antriebseinheit nach Anspruch 4, **dadurch gekennzeichnet, dass** das Dichtsystem (53) mindestenseine kaskadenförmig ausgeführte Doppeldichtung (54) umfasst.

6. Antriebseinheit nach einem der Ansprüche 1 bis 5, **dadurch gekennzeichnet, dass** die Rückstelleinrichtung (26) eine zweistufige, druckpunktartig wirkende Rückstellfedereinheit (46) umfasst.

7. Antriebseinheit nach einem der Ansprüche 1 bis 6, **dadurch gekennzeichnet, dass** der mechanische Anschlag (55, 59) einstellbar ist.

8. Antriebseinheit nach einem der Ansprüche 1 bis 7, **dadurch gekennzeichnet, dass** ein Einbaulagensensor (68) vorgesehen ist, wobei in der Steuerung eine automatische, von dem Signal des Einbaulagensensors abhängige Zuweisung der Schaltfunktionen zu den einzelnen Tastern (9) erfolgt.

9. Antriebseinheit nach einem der Ansprüche 1 bis 8, **dadurch gekennzeichnet, dass** ein Einbaulagensensor (68) vorgesehen ist, wobei die Orientierung der Anzeige von Betriebsinformationen in einem Betriebsinformationsbereich (63) des Displays (10) automatisch in Abhängigkeit von dem Signal des Einbaulagensensors erfolgt.

10. Antriebseinheit nach einem der Ansprüche 1 bis 9, **dadurch gekennzeichnet, dass** das Display (10) ein längsrechteckiges Format aufweist und mindestens zwei Taster (9) vorgesehen sind, welche gruppiert an den beiden kurzen Seiten des Displays (10) angeordnet sind, wobei das Display (10) einen zentralen, im Wesentlichen quadratischen Betriebsinformationsbereich (63) und zwei seitlich angeordnete Betätigungsinformationsbereiche (64) aufweist.

11. Antriebseinheit nach einem der Ansprüche 1 bis 10, **dadurch gekennzeichnet, dass** die Steuerung eine externe kabelgebundene Kommunikationsschnittstelle (65) sowie eine Schnittstelle für eine drahtlose Datenübertragung aufweist.

12. Antriebseinheit nach einem der Ansprüche 1 bis 11, **dadurch gekennzeichnet, dass** die elektro-mechanische Wandlergruppe (69) eine elektro-fluidische erste Wandlerstufe (70) und eine fuid-mechanische zweite Wandlerstufe (71) umfasst.

13. Antriebseinheit nach einem der Ansprüche 1 bis 12, **dadurch gekennzeichnet, dass** an dem Gehäuse (4) ein auf die Steuerung einwirkender, bevorzugt mechanisch verriegelbarer Betriebsartenschalter (13) angeordnet ist.

## Claims

1. A drive unit (3), especially for actuation of flow-regulating valves (2), comprising a housing (4), an electrical input (5), an electromechanical transducer group (69), a mechanical output (6) and an electronic controller, wherein the controller has an electronic display (10) and comprises an input unit (8) with several pushbuttons (9) that penetrate the housing (4), are disposed adjacent to the display (10) and can be depressed against the action of a restoring device (26), **characterized by** contactless switches (36) actuated by the pushbuttons (9), wherein mechanical stops (29, 52, 55, 59) independent of the switches (36) themselves are assigned to the positions of the pushbuttons (9) actuating the switches (36), wherein further the assignment of the switching functions active in the controller to the individual pushbuttons (9) can be varied and the display (10) comprises an operating-information area (63) and at least one actuation-information area (64) adjacent to the pushbuttons (9), wherein the current assignment of the function to the individual pushbuttons (9) is indicated in the actuation-information area (64).

2. A drive unit according to claim 1, **characterized in that** at least one switch (36) is of optical design, especially by comprising a photoelectric barrier (35).

3. A drive unit according to claim 1 or claim 2, **characterized in that** at least one switch (36) is disposed directly on a printed-circuit board (38) supporting further components (39) of the electronic controller.

4. A drive unit according to one of claims 1 to 3, **characterized in that** the housing (4) is of explosion-protected design and the pushbuttons (9) are sealed relative to the housing (4) by means of an explosion-protected sealing system (53).

5. A drive unit according to claim 4, **characterized in that** the sealing system (53) is of cascade-like design and comprises at least a double seal (54).

6. A drive unit according to one of claims 1 to 5, **characterized in that** the restoring device (26) comprises a two-stage restoring-spring unit (46) acting in the manner of a pressure point.

7. A drive unit according to one of claims 1 to 6, **characterized in that** the mechanical stop (55, 59) is adjustable.

8. A drive unit according to one of claims 1 to 7, **characterized in that** an installation-position sensor (68) is provided, wherein the switching functions are automatically allocated in the controller to the individual pushbuttons (9) in a manner dependent on the signal of the installation-position sensor.

9. A drive unit according to one of the claims 1 to 8, **characterized in that** an installation-position sensor (68) is provided, wherein the orientation of the indication of operating information in an operating-information area (63) of the display (10) is determined automatically depending on the signal of the installation-position sensor.

10. A drive unit according to one of claims 1 to 9, **characterized in that** the display (10) has an oblong format and at least two pushbuttons (9) are provided, which are disposed in groups on the two short sides of the display (10), while the display (10) has a central, substantially square operating-information area (63) and two laterally disposed actuation-information areas (64).

11. A drive unit according to one of claims 1 to 10, **characterized in that** the controller is provided with an external hard-wired communications interface (65) as well as with an interface for wireless data transmission.

12. A drive unit according to one of claims 1 to 11, **characterized in that** the electromechanical transducer group (69) comprises an electrofluidic first transducer stage (70) and a fluid-mechanical second transducer stage (71).

13. A drive unit according to one of claims 1 to 12, **characterized in that** a mode-of-operation switch (13), which acts on the controller and preferably can be mechanically interlocked, is mounted on the housing (4).

## Revendications

1. Unité de commande (3), notamment pour manoeuvrer des robinetteries de régulation de débit (2), comprenant un boîtier (4), une entrée électrique (5), un groupe convertisseur électromécanique (69), une sortie mécanique (6) et une commande électronique, la commande électronique comportant un affichage électronique (10) et une unité d'entrée (8) avec plusieurs touches (9) traversant le boîtier (4), disposées près de l'affichage (10), pouvant être comprimées contre l'effet d'un système de rappel (26),
**caractérisée par** des interrupteurs (36) sans contact actionnés par les touches (9), des butées (29,52,55,59) mécaniques elles-mêmes indépendantes des interrupteurs (36) étant affectées aux positions des touches (9) actionnant les interrupteurs (36), l'affectation des fonctions de commutation actives aux touches individuelles dans la commande pouvant être de plus modifiée et l'affichage (10) comprenant une zone d'information de fonctionnement (63) et au moins une zone d'information de manoeuvre (64) voisine des touches (9), l'affectation actuelle de la fonction aux touches individuelles (9) étant affichée dans la zone d'information de manoeuvre (64).

2. Unité de commande selon la revendication 1, **caractérisée en ce qu'**au moins un interrupteur (36) est exécuté de manière optique, notamment en comprenant une barrière lumineuse (35).

3. Unité de commande selon la revendication 1 ou la revendication 2, **caractérisée en ce qu'**au moins un interrupteur (36) est disposé directement sur une platine (38) portant d'autres composants (39) de la commande électronique.

4. Unité de commande selon l'une quelconque des revendications 1 à 3, **caractérisée en ce que** le boîtier (4) est exécuté antidéflagrant et les touches (9) sont étanchéifiées par rapport au boîtier (4) au moyen d'un système d'étanchéité (53) antidéflagrant.

5. Unité de commande selon la revendication 4, **caractérisée en ce que** le système d'étanchéité (53) comprend au moins un joint d'étanchéité double (54) exécuté en forme de cascade.

6. Unité de commande selon l'une quelconque des revendications 1 à 5, **caractérisée en ce que** le système de remise à zéro (26) comprend une unité à ressort de remise à zéro (46) à deux niveaux agissant par point de pression.

7. Unité de commande selon l'une quelconque des revendications 1 à 6, **caractérisée en ce que** la butée mécanique (55,59) est réglable.

8. Unité de commande selon l'une quelconque des revendications 1 à 7, **caractérisée en ce qu'**un capteur de position de montage (68) est prévu, une attribution automatique des fonctions de commutation aux touches (9) indépendante du signal du capteur de position de montage ayant lieu dans la commande.

9. Unité de commande selon l'une quelconque des revendications 1 à 8, **caractérisée en ce qu'**un capteur de position de montage (68) est prévu, l'orientation de l'affichage des fonctions d'information de fonctionnement dans une zone d'information de fonctionnement (63) de l'affichage (10) ayant lieu automatiquement en fonction du signal du capteur de position de montage.

10. Unité de commande selon l'une quelconque des revendications 1 à 9, **caractérisée en ce que** l'affichage (10) comporte un format rectangulaire en longueur et au moins deux touches (9) sont prévues, lesquelles sont disposées groupées sur les deux côtés courts de l'affichage (10), l'affichage (10) comportant une zone d'information de fonctionnement (63) centrale, pour l'essentiel quadratique et deux zones d'information de manoeuvre (64) disposées latéralement.

11. Unité de commande selon l'une quelconque des revendications 1 à 10, **caractérisée en ce que** la commande comporte une interface de communication (65) externe reliée par câble ainsi qu'une interface pour une transmission de données sans fil.

12. Unité de commande selon l'une quelconque des revendications 1 à 11, **caractérisée en ce que** le groupe de convertisseur électro-mécanique (69) comprend un premier étage de convertisseur électro-fluidique (70) et un deuxième étage de convertisseur mécanico-fluidique (71).

13. Unité de commande selon l'une quelconque des revendications 1 à 12, **caractérisée en ce qu'**un interrupteur de mode de fonctionnement (13) de préférence mécaniquement verrouillable, agissant sur la commande, est disposé sur le boîtier (4).
